(19) Europäisches Patentamt
European Patent Office
Office européen des brevets

(11) EP 0 654 053 B1

(12) # EUROPÄISCHE PATENTSCHRIFT

(45) Veröffentlichungstag und Bekanntmachung des Hinweises auf die Patenterteilung:
**26.05.1999 Patentblatt 1999/21**

(21) Anmeldenummer: **93917777.0**

(22) Anmeldetag: **09.08.1993**

(51) Int Cl.[6]: **C08G 18/42**, C08G 18/68, C08G 18/08, C09D 175/06

(86) Internationale Anmeldenummer:
**PCT/EP93/02136**

(87) Internationale Veröffentlichungsnummer:
**WO 94/03513 (17.02.1994 Gazette 1994/05)**

(54) **WASSERVERDÜNNBARES ÜBERZUGSMITTEL AUF POLYOL- UND POLYISOCYANATBASIS, VERFAHREN ZU DESSEN HERSTELLUNG UND SEINE VERWENDUNG**

POLYOL AND POLYISOCYANATE-BASED WATER-DILUTABLE COATING, PROCESS FOR PREPARING THE SAME AND ITS USE

AGENT DE RECOUVREMENT DILUABLE DANS L'EAU, A BASE DE POLYOL ET DE POLYISOCYANATE, PROCEDE DE FABRICATION ET UTILISATION

(84) Benannte Vertragsstaaten:
**AT BE CH DE DK ES FR GB GR IT LI NL PT SE**

(30) Priorität: **08.08.1992 DE 4226242**

(43) Veröffentlichungstag der Anmeldung:
**24.05.1995 Patentblatt 1995/21**

(73) Patentinhaber: **Herberts Gesellschaft mit beschränkter Haftung**
**42285 Wuppertal (DE)**

(72) Erfinder:
- **PATZSCHKE, Hans-Peter**
  **D-42279 Wuppertal (DE)**
- **SCHWAN, Heinrich**
  **D-42287 Wuppertal (DE)**
- **GOL, Franjo**
  **D-51373 Leverkusen (DE)**
- **BUDNICK, Thomas**
  **D-45326 Essen (DE)**

(74) Vertreter: **Türk, Gille, Hrabal**
**Patentanwälte - European Patent Attorneys,**
**Brucknerstrasse 20**
**40593 Düsseldorf (DE)**

(56) Entgegenhaltungen:
**EP-A- 0 497 404**
**EP-A- 0 583 728**
**WO-A-93/05087**
**DE-A- 1 917 162**
**DE-A- 3 903 804**
**FR-A- 2 320 321**
**US-A- 3 882 189**
**US-A- 4 116 902**

- **: "ULLMANNS ENCYKLOPÄDIE DER TECHNISCHEN CHEMIE, 4. AUFL.,BD. 19, 1980, SEITE 306" , , VERLAG CHEMIE, WEINHEIM/DE**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 654 053 B1

## Beschreibung

Die Erfindung betrifft ein wäßriges Überzugsmittel, insbesondere ein wäßriges Zweikomponenten-(2K)-Überzugsmittel, ein Verfahren für seine Herstellung und seine Verwendung in Ein- und Mehrschicht-Lackierungen.

In den letzten Jahren stieg die Bedeutung wäßriger Lacke und Beschichtungen auf Grund immer steigender Emissionsrichtlinien im Hinblick auf die bei der Lackapplikation freiwerdenden Lösemittel stark an. Obwohl inzwischen bereits für viele Anwendungsgebiete wäßrige Lacksysteme zur Verfügung stehen, erreichen diese nicht das hohe Qualitätsniveau konventioneller, lösemittelhaltiger 2-K-Lacke bei Trocknung in niedrigen Temperaturbereichen.

Die Herstellung wäßriger Polyurethan-Dispersionen und ihre Anwendung für die Lackherstellung in Einkomponenten-Systemen sind bekannt.

Die Verwendung von Wasser als flüssige Phase in 2-K-Polyurethanlacken mit freien Isocyanatgruppen ist normalerweise nicht ohne weiteres möglich, weil die Isocyanatgruppen nicht nur mit den reaktiven Gruppen der wasserverdünnbaren Basisharze, sondern auch mit Wasser unter Bildung von Kohlendioxid und Harnstoffgruppen reagieren. Dadurch werden in der Regel die Verarbeitungszeit und die Qualität der Überzüge auf nicht praxisgerechte Werte reduziert.

Nach der DE-OS 26 24 442 sollen wasserverdünnbare OH-gruppenhaltige Polyurethanharze, die gegebenenfalls mit Fettsäuren modifiziert sind, mit isocyanatgruppen enthaltenden Härtern unter Herstellung von 2-K-Systemen kombiniert werden können. Beispiele bzw. eine genaue Beschreibung wie dies erfolgen soll, sind jedoch nicht angegeben. Die DE-PS 27 08 442 beschreibt den Zusatz monomerer organischer Diisocyanate zur Verbesserung des Eigenschaftsbildes wäßriger Polyurethan-Dispersionen.

In der EP-A-0 469 389 werden in Wasser dispergierbare, OH-gruppenhaltige Polyurethane, gegebenenfalls in Gegenwart von niedrigmolekularen Polyalkoholen, mit in Wasser dispergierbaren, freie Isocyanatgruppen enthaltenden mehrfunktionellen Verbindungen gemischt, wobei beide Komponenten beträchtliche Mengen an hydrophilen Zentren eingebaut enthalten, die eine Selbstemulgierbarkeit bewirken. Hierbei kann es sich um anionische Gruppen und um Ethylenoxid-Einheiten handeln, die als terminale und/oder laterale Polyetherketten eingebaut werden. Diese Systeme weisen eine sehr kurze Topfzeit und unzureichende optische Eigenschaften (Bildung von Trübungen) auf.

In der EP-A-0 496 205 wird beschrieben, daß in eine neutralisierte wasserverdünnbare OH-gruppenhaltige Polyolkomponente, die mindestens aus einem Urethan-, Carboxylat- und Hydroxylgruppen enthaltendem Polyester oder Alkydharz besteht, eine flüssige Polyisocyanatkomponente einemulgiert wird. Die Patentschrift gibt keine Lehre, wie mit lösemittelarmen Lacken bei dickeren Schichten eine Blasenbildung im Film vermieden werden kann.

In der DE-OS 40 36 927 wird die Herstellung von Polyethylenoxidgruppen enthaltenden Polyisocyanatzubereitungen beschrieben, die in einfacher Weise ohne Sedimentbildung zu wäßrigen Dispersionen verarbeitet werden, um daraus Verbundfolien-Verklebungen herzustellen. In der DE-OS 41 13 160 werden carboxylgruppenhaltige Polyisocyanatgemische beschrieben, in denen die Carboxylgruppen neben freien Isocyanatgruppen lagerstabil vorliegen und sich ohne Schwierigkeiten gegebenenfalls nach teilweiser Neutralisation in Wasser lösen oder dispergieren lassen. Detaillierte Angaben über den Aufbau der OH-gruppenhaltigen wasserverdünnbaren Harzkomponente werden nicht gemacht.

In US-PS-3,882,189 werden Polyesterharze beschrieben, die Urethanbindungen aufweisen, welche umfassen: A) das Reaktionsprodukt eines Polyesters (1), hergestellt aus mindestens einer Polycarbonsäure und mindestens einem mehrwertigen Alkohol, die im wesentlichen frei sind von ungesättigten Komponenten und natürlichen Ölen, und (2) einem organischen Polyisocyanat; wobei das Verhältnis von (1) und (2) so ist, daß Hydroxyl-Equivalente /(Carboxyl- + Isocyanat)-Äquivalente größer als 1 und bis zu 2.0 beträgt, und das Verhältnis der Carboxyl-Äquivalente/Isocyanat-Äquivalente größer ist als 1 und bis zu 3.0 sein kann; oder B) das Reaktionsprodukt (1) eines Polyesters, hergestellt aus mindestens einer $\alpha,\beta$-ethylenisch ungesättigten Polycarbonsäure und mindestens einem mehrwertigen Alkohol, und (2) einem organischen Polyisocyanat; wobei das Verhältnis von (1) und (2) so ist, daß Hydroxyl-Äquivalente / (Carboxyl- + Isocyanat)-Äquivalente größer als 1 und bis zu 2.0 beträgt, und das Verhältnis der Carboxyl-Äquivalente/ Isocyanat-Äquivalente größer ist als 1 und bis zu 3.0 sein kann. Filmbildende Zusammensetzungen können daraus hergestellt werden, indem das gesättigte Harz A, das in Wasser dispergierbar sein kann, mit 5 bis 50 % eines Aminoplastharzes in Wasser oder einem organischen Lösemittel oder mit einem frei Isocyanat-Gruppen enthaltenden Präpolymer oder Addukt vermischt wird. In einer weiteren beschriebenen Ausgestaltung wird das ungesättigte Harz B mit einem ethylenisch ungesättigten Monomer vermischt und der Additionspolymerisation unterzogen.

Bei Anwendung der vorstehend beschriebenen wasserverdünnbaren 2-K-Systeme für den Lacksektor werden besonders beim Spritzen dicker Schichten und Trocknen bei Raumtemperatur verschiedene Schwierigkeiten beobachtet, wie beispielsweise ein zu kurzes Potlife des Lackgemisches, eine zu starke Blasenbildung mit steigender Schichtdicke und eine zu geringe Wasser- und Benzinfestigkeit von daraus erstellten Beschichtungen.

Aufgabe der vorliegenden Erfindung ist es, ein wäßriges Überzugsmittel zur Verfügung zu stellen, das nur geringe Anteile an organischen Lösemitteln enthält, ein verbessertes Potlife hat, bei niedrigen Temperaturen vernetzt und auch, insbesondere beim Spritzauftrag, bei großen Schichtdicken zu blasenfreien Überzügen führt, die hohe Anforderungen an Glanz, mechanische Stabilität, sowie Schwitzwasserbeständigkeit erfüllen.

Überraschenderweise wurde gefunden, daß das Ziel mit einem speziellen Aufbau des Bindemittelsystems erreicht werden kann.

Gegenstand der Erfindung sind daher wasserverünnbare Zweikomponenten (2K)-Überzugsmittel, enthaltend die getrennt vorliegenden, unmittelbar vor der Anwendung zu mischenden Komponenten A) und B):

A) 40 - 95 Gew.-% eines OH-Gruppen enthaltenden filmbildenden gesättigten oder ungesättigten Polyesters, der mit Fettsäuren modifiziert sein kann, oder eines Gemisches derartiger Polyester in der Form von wäßrigen Dispersionen, wobei der Polyester oder das Gemisch im Durchschnitt eine OH-Zahl von 20 bis 200, ein Zahlenmittel der Molmasse (Mn) von 500 bis 100000, und, jeweils bezogen auf 100 g Harzfestkörper einen Gehalt an Säurefunktionen von 1 bis 80 mEqu und einem Gehalt an Ethylenoxideinheiten von 1 bis 150 mEqu in Form von Polyethylenoxidketten aufweist, wobei die Summe der Säurefunktionen und der Ethylenoxideinheiten 2 bis 200 mEqu beträgt, und wobei die Säurefunktionen gegebenenfalls zumindest teilweise neutralisiert sind,

B) 60- 5 Gew. -% eines oder mehrerer Polyisocyanate mit mehr als einer freien Isocyanatgruppe, die bei Raumtemperatur flüssig sind oder die gegebenenfalls unter Zusatz eines oder mehrerer organischer Lösemittel, flüssig gemacht sind, wobei sich die Gewichtsprozente von A) und B) jeweils auf den Harz-Festkörpergehalt beziehen und auf 100 Gew.-% addieren, sowie

C) gegebenenfalls ein oder mehrere zusätzliche Bindemittel, übliche Pigmente, Füllstoffe und/oder lackübliche Additive oder Hilfsstoffe, eingemischt in die Komponenten A) und/oder B).

Beim erfindungsgemäßen überzugsmittel ist die Komponente B gut in die Komponente A eindispergierbar, gegebenenfalls unter Zusatz von Emulgatoren. Bei dem Polyester der Komponente A handelt es sich um einen, der gegebenenfalls mit Fettsäuren modifiziert sein kann.

Die Herstellung der gebrauchsfertigen Beschichtungsmittel erfolgt kurz vor der Verarbeitung durch einfaches Verrühren der beiden Komponenten A) und B) bei Raumtemperatur. Dabei kann die Polyisocyanatkomponente B) in eine neutralisierte, konzentrierte oder verdünnte wäßrige Polymerdispersion zugegeben werden. Das gelöste bzw. dispergierte Polymerisat übernimmt dabei die Funktion des Emulgators. Durch Zusatz von weiterem Wasser kann die geeignete Verarbeitungsviskosität eingestellt werden.

Unter "wäßriger Dispersion" werden hier heterogene Systeme verstanden, bei denen die organische Harzphase als Tröpfchen oder Teilchen beispielsweise mit einer mittleren Größe von 1 bis 3000 nm, bei monomodalen Verteilungen bevorzugt über 50 und unter 200 nm, bei bimodalen bevorzugt Komponente 1 über 50 und unter 150 nm, sowie Komponente 2 über 200 und unter 500 nm in Wasser verteilt ist. Die Säurezahl bzw. der Neutralisationsgrad sind gegebenenfalls in Kombination mit der Zahl der Polyethylenoxid-Einheiten so abzustimmen, daß die gewünschten Teilchengrößen beim Dispergieren des Harzes unter optimalen Dispergierbedingungen entstehen.

Es hat sich gezeigt, daß die erfindungsgemäßen Überzugsmittel eine niedrige Vernetzungstemperatur aufweisen, die bei 10 bis 120°C, bevorzugt unter 120°C, besonders bevorzugt über 20°C und unter 80°C, z.B. bei 25°C bis 80°C, wodurch sich temperaturempfindliche Substrate gut lackieren lassen.

Die erfindungsgemäßen Beschichtungsmittel weisen nach dem Vermischen der Komponenten A und B eine Topfzeit von mehreren Stunden auf und härten zu hochwertigen, vernetzten Filmen aus, die bezüglich ihres Eigenschaftsniveaus den bislang aus lösemittelhaltigen Zweikomponenten-Polyurethanlakken erhaltenen Lackfilmen vergleichbar und damit bekannten wäßrigen Systemen überlegen sind.

Als hydrophiler Bestandteil der Komponente A) werden weniger als 80, bevorzugt weniger als 70 mEqu Säurefunktionen (z.B. COOH), speziell weniger als 60 mEqu, besonders bevorzugt weniger als 50 mEqu und bevorzugt mehr als 5 mEqu, besonders bevorzugt mehr als 15 mEqu pro 100 g Festharz verwendet. Der Gehalt an Ethylenoxideinheiten beträgt bevorzugt mehr als 1 mEqu, speziell mehr als 5 mEqu, besonders bevorzugt mehr als 20 mEqu, wobei die untere Grenze unter 150 mEqu, bevorzugt unter 100 mEqu und besonders bevorzugt unter 75 mEqu Ethylenoxideinheiten pro 100 g Festharz liegt.

Das hydroxylgruppenhaltige, wasserverdünnbare Polyesterharz kann auch aus einem Gemisch oder Präkondensat von zwei verschiedenen Komponenten bestehen, von denen die saure Komponente A1) Carboxyl- und Hydroxylgruppen, die Komponente A2) nur Hydroxylgruppen enthält, wobei solche Mengenverhältnisse ausgewählt werden, daß die Mischung von Carboxy- und Hydroxy-Äquivalenten der Komponente A) entspricht. Die Polyethylenetherketten können sowohl in die Komponente A1) als auch in die Komponente A2) eingebaut werden. Besonders bevorzugt werden als Komponente A1) ein niedermolekulares, carboxylgruppenhaltiges Alkydharz und als Komponente A2) ein hochmolekulares, hydroxylgruppenhaltiges, nicht modifiziertes lineares Polyesterharz eingesetzt.

Beispielsweise werden 90 bis 40 Gew.-T der Komponente A1) mit 20 bis 190 mÄquiv. COOH/100 g mit 10 bis 60 Gew.-% der Komponente A2) in einem solchen Verhältnis gemischt, daß die Summe der Mengen A1) und A2)

gleich 100 ist und die mÄquiv. der Säurefunktion des Gemisches gleich oder unter den geforderten Grenzwerten für die Einzelkomponente A) liegen. Dabei gilt

$$\text{mÄquiv. } A_1 = \frac{100 \text{ x mÄquiv. A}}{\text{Menge } A_1}$$

Bevorzugte Mengen bestehen aus 50 Gew.-% Komponente $A_1$) zu 50 Gew.-% $A_2$). Besonders bevorzugt wird das Verhältnis 40 : 60, speziell 30 : 70. Die Komponenten A1) und A2) können auch präkondensiert werden. Dabei wird unter Präkondensation das Erwärmen der Komponenten $A_1$) und $A_2$) im Gemisch auf solche Temperaturen verstanden, daß ein definierter Viskositätsanstieg zu beobachten ist.

Ein anderes bevorzugtes hydroxylgruppenhaltiges Gemisch besteht aus einer carboxylgruppenhaltigen Komponente A3) und einer polyoxyethylenoxidgruppenhaltigen Komponente A4). Beispielsweise werden 95 bis 60 Gew.-% der Komponente A3) mit 5 bis 40 Gew.-% der Komponente A4) in einem solchen Verhältnis gemischt, daß in A3) der Gehalt an Säurefunktionen weniger als 800 mEqu und in A4) ein Gehalt an Ethylenoxideinheiten von weniger als 150 mEqu und die Summe beider Funktionen und Komponenten 1 bis 200 mEquiv. beträgt, wobei sich die Äquivalente stets auf die Gesamtmenge von A3) und A4) beziehen.

In einer bevorzugten Ausführungsform sind die Polyester der Komponente A ein Gemisch aus einem oder mehreren Polyestern mit Säurefunktionen und einem oder mehreren Polyestern mit mindestens einer seitenständigen, Ethylenoxideinheiten enthaltenden Ketten.

Die untere Grenze der zahlenmittleren Molmasse (Mn) liegt beispielsweise bei 1000, bevorzugt bei 3000, besonders bei 5000, besonders bevorzugt bei 10000, die obere Grenze bevorzugt bei 50000, besonders bevorzugt bei 15000, gemessen im Gelpermeationschromatographen in Tetrahydrofuran gegen Polystyrolstandard unter üblichen Bedingungen.

Der Einbau erfindungsgemäßer lateraler Polyethylenoxid-Ketten erfolgt nach bekannten Methoden entweder direkt über Einesterung der OH-gruppenhaltigen Polyethylenoxid-monoalkohole in einen entsprechend aufgebauten carboxylgruppenhaltigen Polyester, durch Einesterung nach Umwandlung der OH-Gruppe in eine oder mehrere Carboxylgruppen mit Polycarbonsäureanhydriden oder bevorzugt nach Umwandlung in ein Monoisocyanat und gegebenenfalls daraus abgeleiteten Polyalkoholen.

Für diese erfindungsgemäß anwendbare Verfahren geeignete Verbindungen mit mindestens einer mit Hydroxylgruppen unter Additionsreaktion reagierenden Gruppe und mindestens einer hydrophilen Gruppierung sind beispielsweise die Umsetzungsprodukte von Monohydroxypolyalkylenoxiden des Molekulargewichtsbereichs 500 - 5000, wie sie in an sich bekannter Weise durch Alkoxylierung von monofunktionellen Startermolekülen, wie z.B. einwertigen Alkoholen, wie Methanol, Ethanol, Propanol oder Butanol, zugänglich sind und deren Polyalkylenoxidkette zu mindestens 50 - 100 % aus Ethylenoxideinheiten aufgebaut ist und die neben Ethylenoxideinheiten vorzugsweise ausschließlich Propylenoxideinheiten aufweisen mit beliebigen organischen Polyisocyanaten in einem NCO/OH-Verhältnis von 1,2 : 1 bis 2,2 : 1. Ganz bevorzugt eingesetzt werden erfindungsgemäß die Umsetzungsprodukte der reinen Polyethylenoxide mit einer endständigen Hydroxylgruppe mit Diisocyanaten, die in einem NCO/OH-Verhältnis von 1,8 : 1 bis 2,2 : 1 zur Reaktion gebracht worden sind. Vorzugsweise werden bei der Herstellung des mindestens eine hydrophile Gruppierung aufweisenden Isocyanats die Mengenverhältnisse in Abhängigkeit der Funktionalität des organischen Polyisocyanats so gewählt, daß das entstehende Umsetzungsprodukt im statistischen Mittel ca. eine Isocyanatgruppe aufweist. Dies bedeutet, daß bei der Reaktion von Diisocyanaten mit Monohydroxypolyalkylenoxiden vorzugsweise im NCO/OH-Verhältnis von 2 : 1 gearbeitet wird. Bei Verwendung beispielsweise eines Tetraisocyanats empfiehlt sich hingegen ein NCO/OH-Verhältnis von 4 : 3.

Die auf diese Weise erhältlichen NCO-Gruppen aufweisenden Reaktionsprodukte werden im folgenden als hydrophile Isocyanatkomponenten bezeichnet.

Die Umsetzung des Ausgangspolyisocyanats mit dem Monohydroxypolyalkylenoxid kann in Gegenwart oder auch in Abwesenheit von Lösungsmitteln erfolgen. Vorzugsweise wird diese Umsetzung lösungsmittelfrei vorgenommen. Falls jedoch Lösungsmittel mitverwendet werden sollen, wären hierzu die üblichen inerten Lösungsmittel, wie z. B. Aceton, Methylethylketon oder Tetrahydrofuran geeignet. Nach Beendigung dieser NCO/OH-Addition wird zur Durchführung des erfindungsgemäßen Verfahrens die so erhaltene hydrophile Isocyanat-Komponente mit den sauren OH-gruppenhaltigen Polyestern zur Reaktion gebracht, und zwar in solchen Mengenverhältnissen, daß 0,01 - 25, vorzugsweise über 0,1 und unter 10 % der Hydroxylgruppen der Ausgangsverbindungen mit der hydrophilen Isocyanatkomponenten abreagieren. Hierbei werden die Mengenverhältnisse der Reaktionspartner und die Funktionalität der Hydroxylverbindung darüber hinaus so gewählt, daß in den Verfahrensprodukten im statistischen Mittel maximal 150 mEqu/100 g an Ethylenoxideinheiten vorliegen.

Die Umsetzung der hydrophilen Isocyanatkomponenten mit den Polyolen kann in Gegenwart oder auch in Abwesenheit von Lösungsmitteln erfolgen.

In einer Ausführungsform werden hierbei vorzugsweise mit Wasser unbegrenzt mischbare Lösungsmittel des Siedebereichs 40 - 90°C, wie z.B. Aceton oder Methylethylketon verwendet. Die Additionsreaktion wird bei mäßig erhöhter Temperatur beispielsweise innerhalb des Bereichs von 20 - 90°C durchgeführt.

Nach erfolgter Umsetzung kann das in Lösung vorliegende Verfahrensprodukt (Komponente A) entweder durch Abdestillieren des Lösungsmittels in Substanz erhalten werden oder aber es kann durch Einrühren der Lösung in Wasser und nachfolgendes Abdestillieren des Lösungsmittels in eine wäßrige Lösung oder Dispersion überführt werden. Es ist ebenso möglich, direkt in die Lösung Wasser einzurühren und anschließend das Lösungsmittel destillativ zu entfernen.

In einer anderen Ausführungsform wird die beispielhaft beschriebene hydrophile Isocyanatkomponente mit den OH-Polyestern im geschmolzenen Zustand vereint und bei erhöhter Temperatur, beispielsweise 60 - 120°C zur Reaktion gebracht. Falls das erfindungsgemäße Verfahrensprodukt nach Umsetzung bei Raumtemperatur oder mäßig erhöhter Temperatur beispielsweise 20 - 70°C in flüssiger Konsistenz vorliegt, kann die Überführung der Verfahrensprodukte in ihre wäßrige Dispersion direkt durch Eintragung von Wasser unter starkem Rühren vorgenommen werden.

Gemäß einer weiteren ebenfalls bevorzugten Ausführungsform erfolgt die erfindungsgemäße Modifizierung der OH-Polyalkylenoxidmonoalkohole mit cyclischen organischen Säureanhydriden, vorzugsweise organischen Dicarbonsäureanhydriden unter ringöffnender Additionsreaktion und sich anschließende Veresterung mit dem OH-Polyester.

Zur Durchführung des erfindungsgemäß gemäß dieser Ausführungsform anwendbaren Verfahrens wird vorzugsweise der zu modifizierende Polyalkylenoxidmonoalkohol in der Schmelze bei ca. 50 - 150°C, vorzugsweise 90 - 120°C erst unter ringöffnender Additionsreaktion umgesetzt und dann bei Temperaturen z.B. bis 220°C mit dem OH-Polyol kondensiert.

Geeignete Säureanhydride sind vorzugsweise einfache organische Dicarbonsäureanhydride, wie z.B. Phthalsäureanhydrid, Tetrahydrophthalsäureanhydrid, Hexahydrophthalsäureanhydrid oder Maleinsäureanhydrid. Grundsätzlich ist es jedoch auch möglich, Tricarbonsäureanhydride, wie z.B. 1,3,4-Benzol-tricarbonsäureanhydrid oder Tetracarbonsäureanhydride, wie z.B. 1,2,4,5-Benzol-tetracarbonsäure-monoanhydrid einzusetzen. Bevorzugt werden cycloaliphatische Anhydride eingesetzt.

Eine bevorzugte Ausführungsform der Komponente B besitzt eine Viskosität bei 23°C von 0,1 bis 2000 mPas, besonders bevorzugt über 1 und unter 100 mPas. Die Funktionalität beträgt z.B. 1,5 bis 5 reaktive Isocyanatgruppen pro Molekül, besonders bevorzugt mindestens 2 und höchstens 3.

Beispiele für erfindungsgemäß geeignete (z.B. ölfreie) gesättigte oder ungesättigte Polyester sind durch Polykondensation nach bekannten Verfahren hergestellte Polykondensate mit einer zahlenmittleren Molmasse von 2000 bis 10000, wie sie beispielsweise in S. Paul, Surface Coatings, S. 70 bis 139, John Wiley & Sons, New York, 1985 beschrieben sind.

Die Polyester werden dabei unter Wasserabspaltung aus Polycarbonsäuren und Polyalkoholen durch Erwärmen in der Schmelze oder im Azeotropverfahren hergestellt. Die gewünschte Zahl von Hydroxyl- und Säuregruppen kann durch geeignete Wahl der Äquivalenzverhältnisse, eine geeignete

Reaktionsführung und gegebenenfalls ein stufenweises Arbeiten eingeführt werden. Die geeigneten Verfahrensbedingungen und Auswahlkriterien sind dem Fachmann geläufig. Das Molverhältnis OH/COOH liegt über 0,9, bevorzugt über 0,95, besonders bevorzugt über 1,00 und bevorzugt unter 1,5, besonders bevorzugt unter 1,3.

Geeignete Polycarbonsäuren enthalten beispielsweise zwei und mehr Carboxylgruppen an einem Kohlenwasserstoffgerüst mit beispielsweise 4 bis 36 C-Atomen. Einsetzbar sind auch die veresterungsfähigen Derivate der Polycarbonsäuren, wie Anhydride oder Methylester. Die bevorzugt eingesetzten Dicarbonsäuren sind linear oder verzweigt aliphatisch, alicyclisch oder aromatisch aufgebaut. Die beiden Carboxylgruppen sind bevorzugt so angeordnet, daß sie kein intramolekulares Anhydrid bilden können, das heißt die beiden Carboxylgruppen sind beispielsweis durch eine Kohlenstoffkette mit 3 bis 14 C-Atomen, bevorzugt 4 bis 8 C-Atomen, voneinander getrennt.

Geeignete Beispiele für Dicarbonsäuren und deren Derivate sind Phthalsäureanhydrid, Isophthalsäure, mit niederen Alkylgruppen substituierte Isophthalsäure, Terephthalsäuredimethylester, Tetrahydro- und Hexahydrophthalsäureanhydrid, Bernsteinsäureanhydrid, Methyltetrahydrophthalsäureanhydrid, Adipinsäure, 2,2,4-Trimethyladipinsäure, Acelainsäure, Sebacinsäure, dimerisierte Fettsäuren, Cyclopentandicarbonsäure, 1,3- und 1,4-Cyclohexandicarbonsäuren, Norbornendicarbonsäuren, Endoethylencyclohexandicarbonsäure oder halogenierte Dicarbonsäuren wie Chlorphthalsäureanhydrid und Hexachlorendomethylentetrahydrophthalsäureanhydrid oder deren Mischungen. Höherfunktionelle Polycarbonsäuren und deren Derivate wie Trimellithsäureanhydrid, Pyromellithsäureanhydrid oder Bisanhydride, können anteilweise eingebaut werden, bevorzugt um einen Polyester mit erhöhter Säurezahl zu erhalten. Eine geeignete Tricarbonsäure kann auch durch substituierende Addition oder Diels-Alder-Reaktion von Maleinsäureanhydrid erhalten werden. Zur Herstellung von ungesättigten Polyestern wird bevorzugt mit Maleinsäureanhydrid oder Fumarsäure kondensiert.

Für die Synthese oder Polyester bevorzugte Alkohole sind aliphatische, cycloaliphatische und araliphatische Alkohole mit 2 bis 6, vorzugsweise 2 bis 4 Hydroxylgruppen und 2 bis 24 C-Atomen pro Molekül mit einer Molmasse

von 62 bis 400. An ihrer linearen oder substituierten Kohlenstoffkette, die gegebenenfalls durch Ether- oder Estergruppen unterbrochen ist, sitzen primäre, sekundäre oder tertiäre Alkoholgruppen.

So werden beispielsweise als Diole eingesetzt Glykole wie Ethylenglykol, Propylenglykol, Butandiol-1,4, Pentandiol-1,6, Hexandiol-1,6, Decandiol-1,2, 2,2-Ethyl-butyl-propandiol-1,3, 2,2-Dimethyl-propandiol-1,3, Cyclohexandimethanol, 1,1-Isopropyliden-bis-(p-phenoxy)di-1-ethanol, 1,1-Isopropyliden-bis(p-phenoxy)di-2-propanol, 1,3-Di-(hydroxyethyl)-5,5-dimethylhydantion, sowie die hydrierten Bisphenole A und F. Als Etheralkohole werden beispielsweise Diethylenglykole, Triethylenglykole, Dipropylenglykole oder Tripropylenglykole, sowie ethoxylierte oder propoxylierte Bisphenol A- oder -F-Produkte verwendet. Ein einsetzbarer Esteralkohol ist z.B. Hydroxypivalinsäureneopentylglykolester.

Beispiele für höherfunktionelle Polyole sind Glycerin, Trimethylolethan, Trimethylolpropan, Trimethylolhexan, Di-trimethylolpropan, 2,2-Dimethylol-butanol-(3), 2,2-(Bis-hydroxymethyl)-butanol-(1), Pentaerythrit, Di-pentaerythrit, Tripentaerythrit, Tris-(2-hydroxyethyl)-isocyanurat, sowie ethoxylierte oder propoxylierte Trimethylolpropan und Pentaerythrit-Produkte oder Zuckeralkohole wie Mannit oder Sorbit und deren Mischungen. Zur Herstellung ungesättigter Polyester können auch ungesättigte Polyalkohole, wie Glycerinmonoallylether oder Trimethylolpropanmonoacrylsäureester, eingesetzt werden. Weitere Beispiele für höherfunktionelle Polyole, die zur Herstellung der Polyester geeignet sind, sind Epoxidharze oder Reaktionsprodukte von Epoxidharzen mit sek.-Aminoalkoholen oder Dialkanolalkancarbonsäuren, wie Dimethylolpropionsäure.

Primäre, kettenabbrechend wirkende Monoalkohole wie Isodecanol, Cyclohexanol, Benzylalkohol oder Fettalkohole können anteilig, bevorzugt bei Verwendung von mehr als zweibasischen Carbonsäuren, mit einkondensiert werden.

Um wasserverdünnbare Polyester zu erhalten, werden anionische Gruppen oder in anionische Gruppen überführbare Gruppen, z.B. Carboxylatgruppen, Carboxylgruppen und/oder Phosphorsäuregruppen und/oder Sulfonsäuregruppen, oder ihre Salze eingebracht. Dies kann beispielsweise durch Mitverwendung von entsprechenden Monomeren bei der Herstellung von Harzen erzielt werden. Zur Einführung von Carboxylgruppen sind beispielsweise mehr als zwei Carboxylgruppen enthaltende Diole und/oder Polyole geeignet, die bei der Herstellung der Harze in entsprechenden Mengen mitverwendet werden. Es werden dazu bevorzugt Alkansäuren mit ein bis zwei OH-Substituenten an den alpha-ständigen Kohlenstoffatomen eingesetzt. Diese Polyole haben im allgemeinen 1 bis 3, bevorzugt eine Carboxylgruppe im Molekül.

Sie haben 2 bis etwa 25, vorzugsweise 3 bis 10 Kohlenstoffatome. Beispiele für solche Verbindungen sind Hydroxypivalinsäure, Dihydroxypropionsäure, Dihydroxybernsteinsäure, Dihydroxybenzoesäure und/oder Dihydroxy-Cyclohexanmonocarbonsäure. Eine besondere bevorzugte Gruppe von Dihydroxyalkansäuren sind die 2,2-Dimethylolalkansäuren, die die Strukturformel I

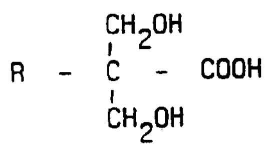

(II)

aufweisen, worin R Wasserstoff oder eine Alkylgruppe mit bis zu etwa 20 Kohlenstoffatomen bedeutet. Beispiele für solche Verbindungen sind 2,2-Dimethylolessigsäure, 2,2-Dimethylolpentansäure und 2,2-Dimethylolbuttersäure. Die bevorzugte Dihydroxyalkansäure ist 2,2-Dimethylolpropionsäure. Es wird soviel Monomer, wie z.B. Dimethylolpropionsäure in das Gemisch als Diol gegeben, daß die Säurezahl des fertiggestellten Harzes 5 bis 50, bevorzugt über 10 und unter 45, beträgt. Die untere Grenze liegt besonders bevorzugt bei 15, die obere Grenze liegt bevorzugt bei 35. Verwendbare Phosphorsäuregruppen enthaltende Verbindungen sind z.B. 2,2-Dimethylolpropan-phosphonsäure oder Diethanolamidmethan-phosphonsäure. Es werden so viele von diesen Anionengruppen bildenden Monomeren zugesetzt, daß die Säurezahl des Harzes im gewünschten Bereich liegt.

Gemäß einem Beispiel für eine bevorzugte Ausführungsform kann in üblicher Weise ein Carbonsäureanhydrid bei Temperaturen von 80 bis 140°C mit einem hydroxylgruppenhaltigen Polykondensat umgesetzt werden, das bei 180 bis 240°C im Schmelz- oder nach dem Azeotrop-Verfahren erhalten wird. Auf diese Weise wird eine möglichst hohe Molmasse mit einer relativ hohen Säurezahl kombiniert. Bevorzugt werden hierbei Reaktionen unter Verwendung von Trimellithsäureanhydrid oder Hexahydrophthalsäureanhydrid. Nach einem modifizierten Polykondensationsverfahren wird die Carboxylgruppe durch Veresterung mit Dimethylolpropionsäure eingebracht, z.B. durch Reaktion von Anhydriden wie beispielsweise Trimethyladipinsäureanhydrid mit den OH-Gruppen der Dimethylolpropionsäure und anschließender Kondensation mit Polyalkoholen. Der Einbau von Dimethylolpropionsäure wird bevorzugt.

Wie vorstehend erläutert, kann gleichzeitig mit der Einführung anionischer Gruppen die Molmasse erhöht

werden. Nach beendeter Reaktion werden die carboxylgruppenhaltigen Polyester in eine wäßrige Dispersion überführt. Hierzu wird beispielsweise die organische Polymerlösung in eine meist vorgewärmte Wasserphase eingeleitet und gegebenenfalls das organische Lösemittel destillativ, im allgemeinen unter Anlegen eines Vakuums, entfernt.

Um eine gute Dispergierbarkeit in Wasser zu erreichen, wird entweder vor aem Emulgieren in das Harz oder in der Wasserphase ein Neutralisationsmittel, wie z.B. anorganische Basen, Ammoniak oder primäre, sekundäre oder tertiäre Amine oder Aminoalkohole zugesetzt, um saure Gruppen zumindest teilweise in anionische Gruppen überzuführen. Als anorganische Basen dienen beispielsweise Natriumhydroxid, Kaliumhydroxid oder Lithiumhydroxid. Als Amine werden z.B. Trimethylamin, Mono-, Di- und Triethylamin, Mono-, Di- und Triethanolamin, Dimethylethanolamin, Dimethylisopropanolamin, Methyldiethanolamin, Dimethylaminoethylpropanol oder N-Methyl-Morpholin eingesetzt. Bevorzugt werden flüchtige tertiäre Monoamine, die keine isocyanatreaktiven Gruppen enthalten. Die Neutralisationsmittel können sowohl im stöchiometrischen Unter- als auch Überschuß verwendet werden. Bevorzugt ist ein Neutralisationsbereich von 50 bis 100 % der vorhandenen Carboxylgruppen. Bei der Herstellung der Dispersion ist darauf zu achten, daß mit steigendem Neutralisationsgrad durch den Polyelektrolytcharakter der Polymeren eine deutliche Viskositätszunahme erfolgen kann. Um einen möglichst hohen Festkörper zu erhalten, wird daher im allgemeinen mit der für die Stabilität der Dispersion gerade ausreichenden Menge an Neutralisationsmittel gearbeitet. Ein Zusatz von geringen Anteilen Polyamin mit zwei oder mehr sekundären und/oder primären Aminogruppen ist für die Verringerung der Blasenbildung beim Spritzen der Lacke von Vorteil. Die Aminogruppen können an aliphatischen, cycloaliphatischen, ar-aliphatischen oder aromatischen Kohlenwasserstoffgrundgerüsten mit linearer, verzweigter oder cyclischer Struktur gebunden sein. Diamine werden bevorzugt. Geeignete Beispiele sind Ethylendiamin, 1,2- und 1,3-Propandiamin, 1,4-Butandiamin, 2-Methyl-pentan-diamin, Hexandiamin-1,6, 3-Amino-1-methyl-amino-propan, N-Methyl-dipropylentriamin, 3-Amino-1-cyclohexylaminopropan, N,N'-Dimethylethylendiamin, 2,2-Dimethyl-1,3-propandiamin, 1-Amino-3-amino-3,5,5-trimethyl-cyclohexan (Isophorondiamin), 1,2- und 1,4-Cyclohexandiamin, 4,4-Diamino-dicyclohexylmethan, 3,3-Dimethyl-4,4'-diaminodicyclohexylamin, Piperazin, 2,5-Dimethylpiperazin, N,N'-Bis-(2-aminoethyl)-piperazin, p, m oder o-Phenylendiamin, 4,4'-Diamino-diphenylmethan, Polyoxypropylenamine wie 4,9-Dioxadodecan-1,12-diamin oder 4,7,10-Trioxa-tridecan-1,13-diamin und/oder Aminoethyl-ethanolamin. Zur Gewährleistung der Stabilität der Lack/Härter-Emulsion muß eine ausreichend hohe Konzentration der Neutralisationsmittel erhalten bleiben. Das wird durch ein Equivalentverhältnis von tertiären Aminen zu NH-funktionellen Polyaminen von 2 : 1 bis 6 : 1 bei einem Neutralisationsgrad von 60 bis 110 %, bevorzugt über 70 und unter 100 % erreicht. Die erhaltenen wäßrigen Dispersionen weisen im allgemeinen noch einen Gehalt an Restlösemittel von unter 10 Gew.-%, vorzugsweise von unter 5 Gew.-% auf. Die praktisch restlose Entfernung auch von höher als Wasser siedenden Lösemitteln ist beispielsweise durch azeotrope Destillation möglich.

Die in der Komponente A eingesetzten Polyester können auch mit Fettsäuren modifiziert sein. Es handelt sich hierbei um Alkydharze. Die Modifizierung mit Fettsäure kann nach bekannten Verfahren erfolgen. Beispielsweise können die Fettsäuren bei der Herstellung der Polyester aus Polyolen und Polycarbonsäuren mit einkondensiert werden. Es können hierzu jedoch auch Hydroxylgruppen enthaltende Fettsäureester von Polyalkoholen verwendet werden. Letztere können z.B. auch mit Diisocyanaten an OH-gruppenhaltige Polyester ankondensiert werden.

Unter Fettsäuren werden im allgemeinen lineare oder verzweigte Monocarbonsäuren mit 6 bis 35 C-Atomen verstanden. Die Fettsäuren können nichttrocknend oder trocknend sein. Nicht-trocknende Fettsäuren werden bevorzugt in Decklacken, trocknende Fettsäuren bevorzugt für Füller und Grundierungen verwendet.

Beispiele für geeignete nicht-trocknende Fettsäuren sind bevorzugt gesättigte und einfache ungesättigte lineare oder verzweigte aliphatische Monocarbonsäuren, bevorzugt mit einer Kohlenstoffanzahl von 6 bis 18, besonders bevorzugt mit 8 bis 14 C-Atomen.

Beispiele für geeignete trocknende Fettsäuren sind ungesättigte Fettsäuren oder Fettsäuregemische, die mindestens eine Monocarbonsäure mit mindestens zwei isoliert oder konjugiert ungesättigten Doppelbindungen enthalten und eine Jodzahl über 125 haben. Bevorzugt werden ungesättigte Fettsäuren mit einer linearen Kohlenstoffkette mit 16 bis 18 Kohlenstoffatomen.

Spezielle Beispiele für geeignete nicht-trocknende Fettsäuren sind 2-Ethylhexansäure, Isononansäure, Versaticsäure, Neodecansäure oder Cocosfettsäure sowie Ölsäure. Als trocknende Fettsäuren werden beispielsweise bevorzugt ungesättigte Monocarbonsäuren mit einer Jodzahl über 125 und einer C-18-Kohlenstoffkette verstanden. Hierunter fallen besonders isoliert ungesättigte Fettsäuren mit zwei oder drei isolierten Doppelbindungen verschiedener sterischer Konfiguration oder entsprechende Konjugensäuren. Solche Fettsäuren sind beispielsweise in natürlichen Ölen, wie Leinöl, Sojaöl, Saffloröl, Baumwollsaatöl, Sonnenblumenöl, Erdnußöl oder Ricinusöl, Holzöl und Ricinenöl enthalten. Die daraus gewonnenen ungesättigten Fettsäuren sind Leinölfettsäure, Safflorölfettsäure, Tallölfettsäure, Baumwollsaatfettsäure, Erdnußölfettsäure, Sonnenblumenölfettsäure, Holzölfettsäure oder Ricinenfettsäure.

Es können auch sogenannte technische Öle als Fettsäuren eingesetzt werden, die im allgemeinen Mischungen von cis-Linolensäure, Linolsäure, Ölsäure und Stearinsäure sind. Die technischen Öle bzw. Fettsäuren können als solche eingesetzt werden, oder sie werden durch Umesterungsreaktionen oder nach Dehydratisierungsreaktionen (Ricinenfettsäure) in den Polyester eingebaut.

Bei Verwendung von mehrfach ungesättigten Fettsäuren werden besonders bevorzugt Mischungen aus isoliert und konjugiert ungesättigten Fettsäuren, z.B. 10 bis 80 Gew.-% konjugiert ungesättigten Fettsäuren, eingesetzt. Der Anteil an eingebauten gesättigten und ungesättigten Fettsäuren beträgt bevorzugt 20 bis 50 Gew.-%, bezogen auf den Harzfestkörper. Dieser Anteil an gesättigten und ungesättigten Fettsäuren enthält besonders bevorzugt 10 bis 80 Gew.-% ungesättigte Fettsäuren mit konjugierten Doppelbindungen. Für nichtvergilbende Harze werden gesättigte Monocarbonsäuren oder Fettsäuren mit einer oder zwei isolierten Doppelbindungen bevorzugt. Die gewonnenen Fettsäuren können durch fraktionierte Destillation, Isomerisierung oder Konjugierung chemisch optimiert sein.

Unter Monocarbonsäuren, die mit den Fettsäuren zumindest teilweise mitverwendet werden können, werden beispielsweise alicyclische oder aromatische Monocarbonsäuren mit 6 bis 35 C-Atomen verstanden. Sie können gegebenenfalls substituiert sein. Zur Modifizierung der Eigenschaften des Polyester können bis zu 15 Gew.-%.der ungesättigten Fettsäuren durch andere Monocarbonsäuren wie Benzoesärue, tert.-Butylbenzoesäure, Hexahydrobenzoesäure oder Abietinsäure ersetzt sein.

Bei der Polyisocyanatkomponente B handelt es sich um beliebige organische Polyisocyanate mit aliphatisch, cycloaliphatisch, araliphatisch und/oder aromatisch gebundenen, freien Isocyanatgruppen, die bei Raumtemperatur flüssig sind oder in gelöster Form bei 23°C im allgemeinen eine Viskosität von 0,5 bis 2000 mPas, vorzugsweise über 1 und unter 1000 mPas, besonders bevorzugt unter 200 mPas aufweisen. Bevorzugt handelt es sich bei der Polyisocyanatkomponente B um Polyisocyanate oder Polyisocyanatgemische mit ausschließlich aliphatisch und/oder cycloaliphatisch gebundenen Isocyanatgruppen mit einer mittleren NCO-Funktionalität von 1,5 bis 5, bevorzugt 2 bis 3.

Besonders bevorzugt werden Polyisocyanate mit 4 bis 25, vorzugsweise 4 bis 16 C-Atomen, die in 2-Stellung zur NCO-Gruppe eine oder zwei lineare, verzweigte oder cyclische Alkylgruppen mit 1 bis 12, bevorzugt 1 bis 4 C-Atomen, enthalten.

Falls erforderlich, können die Polyisocyanate in Abmischung mit geringen Mengen an inerten Lösemitteln zum Einsatz gelangen, um die Viskosität auf einen Wert innerhalb der genannten Bereiche abzusenken. Die Menge derartiger Lösemittel wird jedoch maximal so bemessen, daß in den letztendlich erhaltenen erfindungsgemäßen Beschichtungsmitteln maximal 20 Gew.-% Lösemittel, bevorzugt unter 10 %, bezogen auf die Menge an Wasser, vorliegt, wobei auch das gegebenenfalls in den Polyesterdispersionen noch vorliegende Lösemittel mit in die Berechnung eingeht. Als Zusatzmittel für die Polyisocyanate geeignete Lösemittel sind beispielsweise aromatische Kohlenwasserstoffe wie Benzol, Toluol, Xylol, Chlorbenzol, Ester wie Ethylacetat, Butylacetat, Methylglykolacetat, Ethylglykolacetat, Methoxypropylacetat, Ether wie Tetrahydrofuran, Dioxan, vollveretherte Mono- oder Diglykole von Ethylenglykol oder Propylenglykol wie Diethylenglykol oder Dipropylenglykol-dimethylether, Ketone wie Aceton, Methylethylketon, halogenhaltige Lösemittel wie Methylenchlorid oder Trichlormonofluorethan.

Bei den erfindungsgemäß geeigneten, jedoch weniger bevorzugten aromatischen Polyisocyanaten handelt es sich insbesondere um übliche sogenannte "Lackpolyisocyanate" auf Basis von 2,4-Diisocyanatotoluol oder dessen technischen Gemischen mit 2,6-Diisocyantotoluol oder auf Basis von 4,4'-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate wie sie durch Umsetzung von überschüsigen Mengen an 2,4-Diisocyanatotoluol mit mehrwertigen Alkoholen wie Trimethylolpropan und anschließender destillativer Entfernung des nicht umgesetzten Diisocyanat-Überschusses erhalten werden. Weitere aromatische Lackpolyisocyanate sind beispielsweise die Trimerisate aer beispielsweise genannten monomeren Diisocyanate, das heißt die entsprechenden Isocyanato-isocyanurate, die ebenfalls im Anschluß an ihre Hersteliung vorzugsweise destillativ von überschüssigen monomeren Diisocyanaten befreit worden sind.

Als Komponente B gut geeignet sind beispielsweise "Lackpolyisocyanate" auf Basis von Hexamethylendiisocyanat, 1-Isocyanato-3,3,5-trimethyl-5-isocyanatomethyl-cyclohexan (IPDI) und/oder Bis(isocyanato-cyclohexyl)-methan und die an sich bekannten Biuret-, Allophanat-, Urethan- und/oder Isocyanuratgruppen aufweisenden Derivate dieser Diisocyanate, die im Anschluß an ihre Herstellung, vorzugsweise durch Destillation von überschüssigem Ausgangsdiisocyanat bis auf einen Restgehalt von weniger als 0,5 Gew.-% befreit worden sind. Hierzu gehören Biuretgruppen aufweisende Polyisocyanate auf Basis von Hexamethylendiisocyanat, die aus Gemischen von N,N',N"-Tris (6-isocyanatohexyl)-biuret mit untergeordneten Mengen seiner höheren Homologen, sowie die cyclischen Trimerisate von Hexamethylendiisocyanat, die im wesentlichen aus N,N',N"-Tris-(6-isocyanatohexyl)-isocyanurat im Gemisch mit untergeordneten Mengen von seinen höheren Homologen bestehen. Insbesondere bevorzugt werden Gemische aus Uretdion- und/oder Hexamethylendiisocyanat, wie sie durch katalytische Oligomerisierung von Hexamethylendiisocyanat unter Verwendung von Trialkylphosphinen entstehen.

Eine Gruppe geeigneter aliphatischer Polyisocyanate wird durch selektive Reaktion silylierter Polyalkohole mit Isocyanaten hergestellt, wie beispielsweise das Esterisocyanat auf Basis von Hexandiisocyanat und Pentaerythrit. Sie weisen besonders günstige niedrige Viskositäten auf.

Die Polyisocyanate können auch in der Form Isocyanat-modifizierter Harze verwendet werden. Für den Einbau in harzähnliche Grundkörper werden Isocyanatverbindungen verwendet, die zwei unterschiedlich reaktive NCO-Gruppen enthalten wie beispielsweise Allylmonoisocyanat, Vinyl-phenylisocyanat, (Meth)acryloylisocyanat, (Meth)acrylsäure-β-isocyanatoethylester, oder bevorzugt m- oder p-Dimethyltoluylen-diisocyanat (oder 2-Isocyanato-2-(4-isocyanatophenyl)-propan) oder die neben einer sterisch behinderten Isocyanatgruppe noch eine radikalisch polymerisierbare Doppelbindung enthalten wie beispielsweise m- oder p-Isopropenyl- , -dimethylbenzylisocyanat. Mit Hilfe dieser reaktiven Bausteine können entweder durch Umsetzung von OH-Gruppen von Polyacrylaten, Polyester oder Polyurethanen mit der reaktiveren Isocyanatgruppe oder durch Einpolymerisieren der Doppelbindung in geeignete Polymerisatharze isocyanatgruppenhaltige Vernetzer mit einer höheren Molmasse und Funktionalität hergestellt werden.

Für den erfindungsgemäßen Einsatz als Komponente B sind besonders bevorzugt sterisch behinderte Polyisocyanate der allgemeinen Formel

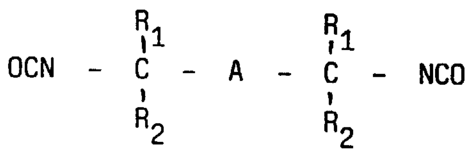

(I)

wobei

$R_1$ = H oder $R_2$,
$R_2$ = $C_nH_{2n+1}$

mit n = 1 bis 12, bevorzugt 1 bis 4 sind.

Die Substituenten $R_1$ und $R_2$ sind entweder linear oder verzweigt, gleich oder ungleich. Das Grundgerüst A kann eine einfache Bindung darstellen oder aus einem aromatischen oder alicyclischen Ring oder aus einer aliphatischen linearen oder verzweigten Kette mit 1 bis 12 C-Atomen bestehen.

Beispiele hierfür sind 1,1,6,6-Tetramethyl-hexamethylendiisocyanat-1,6, 1,5-Dibutyl-pentamethylendiisocyanat-1,5, 1,4-Dimethyl-cyclohexandiisocyanat-1,4, p- oder m-Tetramethylen-xylylendiisocyanat und die entsprechenden hydrierten Homologen. Diese Diisocyanate können ebenfalls in geeigneter Weise zu höherfunktionellen Verbindungen umgesetzt werden, beispielsweise durch Trimerisierung oder durch Umsetzung mit Wasser oder mit mindestens dreiwertigen Alkoholen, wie Trimethylolpropan. Tetramethylen-xylylendiisocyanat und sein Reaktionsprodukt mit Trimethylolpropan werden besonders bevorzugt. Es können auch trimerisierte Diisocyanate verwendet werden, deren Diisocyanate nur eine sterisch behinderte Isocyanatgruppe enthalten, wie beispielsweise 3(4)-Isocyanatomethyl-1-methylcyclohexyl-isocyanat.

In einer bevorzugten Ausführungsform umfaßt die Komponente B) ein oder mehrere sterisch nicht behinderte, difunktionelle Polyisocyanate in Kombination mit einem oder mehreren sterisch behinderten, mindestens trifunktionellen Polyisocyanaten.

Gemäß einer besonders bevorzugten Ausführungsform der Erfindung werden die vorstehend genannten sterisch gehinderten Polyisocyanate der allgemeinen Formel I im Gemisch mit beliebigen aliphatischen Isocyanaten, bevorzugt Diisocyanaten, eingesetzt. Hierdurch wird eine besondere Steigerung der Topfzeit erzielt. Es werden bevorzugt im Gemisch 1 - 60 Gew.-%, speziell mehr als 5 Gew.-% und weniger als 40 Gew.-% Diisocyanate der allgemeinen Formel I, oder ihre höherfunktionelle Derivate, eingesetzt. Die Gewichtsprozente beziehen sich auf die als Komponente B eingesetzten gesamten Polyisocyanate.

Um eine gute Dispergierbarkeit der Polyisocyanate zu erzielen, kann eine geeignete niedrige Viskosität eingestellt werden. Hierzu dient auch das Lösen von hochviskosen oder festen Polyisocyanaten in Wasserzumindest teilweise mischbaren organischen Lösemitteln, die nicht oder nur langsam mit Isocyanaten reagieren. Nicht-reaktive Lösemittel sind beispielsweise Glykoldialkylether, wie Glykoldimethylether, Ester, wie Ethylglykol-Acetat, Ketone, wie Azeton oder Dioxan oder N-Methylpyrrolidon. Bevorzugt werden Alkohole mit sterisch behinderten Alkoholgruppen, Ketonalkohole, Alkoxyalkanole oder glykole, wie Butoxyethanol, Butyldiglykol, Methoxyisopropanol oder Diacetonalkohol. Mit ihnen wird kurz vor der Verarbeitung ohne Erwärmen eine Polyisocyanatlösung hergestellt, die bei einem Festkörper über 40 Gew.-%, bevorzugt von 50 bis 95 Gew.-%, eine Viskosität von 0,5 bis 2000 mPas, bevorzugt über 1 und unter 20 mPas hat.

Zur Herstellung der gebrauchsfertigen Beschichtungsmittel wird die Polyisocyanat-Komponente B in der wäßrigen Dispersion des Polyesters, Komponente A, eindispergiert, wobei bevorzugt bei ölfreien Polyestern unter Zusatz eines oder mehrerer Emulgatoren gearbeitet werden kann. Die Durchmischung kann durch einfaches Verrühren bei Raumtemperatur erfolgen.

Die Menge der Polyisocyanat-Komponente wird dabei so bemessen, daß bevorzugt ein NCO/OH-Äquivalentverhältnis, bezogen auf die Isocyanatgruppen der Komponente B und die alkoholischen Hydroxylgruppen der Komponente A von 0,5 : 1 bis 5 : 1, vorzugsweise 0,8 : 1 bis 2 : 1, resultiert.

Vor Zugabe der Polyisocyanat-Komponente B können der Polykondensat-Komponente A, das heißt der Dispersion bzw. Lösung des Polymeren, die üblichen Hilfs- und Zusatzmittel der Lacktechnologie einverleibt werden.

Diese können auch in der Polyisocyanat-Komponente B enthalten sein, sofern sie inert gegen Isocyanatfunktionen sind.

Die erfindungsgemäßen Dispersionen können, falls gewünscht, während oder nach ihrer Herstellung mit anderen physikalisch trocknenden oder isocyanathärtenden Polymeren, z.B. Polyacrylaten, Polyurethanen sowie Hartharzen, unmodifizierten und modifizierten Polymeren, wie sie etwa bei H. Kittel, Lehrbuch der Lacke und Beschichtungen, Bd. I, Teil 1, S. 122 bis 445, beschrieben sind, kombiniert werden. Tragen die zusätzlichen Bindemittel reaktive Gruppen, wie beispielsweise Hydroxylgruppen, so sind diese bei dem Mischungsverhältnis der Komponenten A und B zu berücksichtigen. Bevorzugte Hartharze sind natürliche oder synthetische Hartharze wie Kolophoniumester, Maleinatharze oder gegebenenfalls mit Fettsäuren modifizierte Phenolharze, sowie OH-gruppenhaltige oder OH- und COOH-gruppenhaltige Polyacrylatharze, Polyurethanharze oder Polyester in Lösungs- oder Emulsionsform.

Die erfindungsgemäßen Überzugsmittel bestehen aus den oben erwähnten OH-gruppenhaltigen wasserdispergierbaren Bindemitteln und den Polyisocyanaten. Sie können als Hilfs- und Zusatzmittel beispielsweise weiter Pigmente/Füllstoffe, lacktechnische Additive und Hilfsmittel, wie Lichtschutzmittel, Verlaufsmittel, Entschäumer, Rheologiehilfsmittel, Verdicker, Katalysatoren, Siccative sowie weitere Bindemittel enthalten. Sie dienen zur Beeinflussung von lacktechnischen Eigenschaften, wie z.B. Aushärtungsdauer, Oberflächengüte oder zur Beeinflussung von anwendungstechnischen Eigenschaften wie z.B. der Viskosität.

Die erfindungsgemäßen Überzugsmittel können emulgatorfrei, jedoch auch unter Mitverwendung von externen Emulgatoren, besonders nicht-ionischen Emulgatoren bereitet werden. Verwendbare Emulgatoren sind beispielsweise Stoffe, deren Moleküle einen ausgesprochen hydrophilen mit einem ausgesprochen hydrophoben Bestandteil verbinden. Als hydrophiler Teil dienen anionische, kationische und amphotere ionische Gruppen, sowie nichtionische Gruppen. Als hydrophober Bestandteil dienen aromatische, cyclische, lineare oder verzweigte aliphatische Ketten verschiedener Kettenlänge, gegebenenfalls mit Ester-, Urethan- oder Amidgruppen, die endständig mit anionischen, kationischen, amphoteren oder nichtionischen Gruppen versehen sind. Bevorzugt werden Emulgatoren, deren Gruppen die Vernetzungsreaktion der Polyisocyanate bei der Filmbildung nicht stören. Beispiele hierfür sind Reaktionsprodukte von langkettigen Fettsäuren, Alkoholen oder alkylierten Phenolen mit Alkylenoxiden mit 10 bis 70 Alkylenoxideinheiten; bevorzugt werden reine Polyethylenoxideinheiten oder gemischte Ethylen-propylenoxidketten in Form von Blockcopolymeren. Besonders geeignet sind Emulgatoren, die zusätzlich solche reaktiven Gruppen enthalten, die während der Verfilmung in das Netzwerk einreagieren, beispielsweise über reaktive Doppelbindungen. Es können beispielsweise übliche Handelsprodukte eingesetzt werden.

Als Pigmente sind die üblichen Pigmente, wie z.B. in DIN 55 944 beschrieben, geeignet. Es werden beispielsweise Ruß, Titandioxid, feindisperses Siliciumdioxid, Aluminiumsilikat, Metallpulver oder -plättchen, organische und anorganische Farbpigmente, Korrosionsschutzpigmente, wie Blei- und Chromatverbindungen, und Metalleffektpigmente eingesetzt. Zusätzlich zu den Pigmenten und Füllstoffen können gegebenenfalls übliche organische Farbstoffe eingesetzt werden. Ebenfalls ist es möglich, Anteile von vernetzten organischen Mikroteilchen zuzusetzen.

Die Verfahren zur Herstellung der Überzugsmittel aus den Einzelkomponenten sind bekannt. Beispielsweise ist es möglich, die Pigmente in einem besonders geeigneten Anreibeharz zu dispergieren und gegebenenfalls auf die notwendige Kornfeinheit zu vermahlen. Eine andere Arbeitsweise sieht vor, die Pigmente in der wäßrigen Dispersion der Bindemittelkomponente A zu vermahlen.

Die Auswahl der Pigmente, Füllstoffe und die Bedinungen des Mahlprozesses werden so gewählt, daß die Stabilität der wäßrigen Dispersion nicht beeinflußt wird. Nach dem Dispergieren der Pigmente ist es möglich, weitere Bindemittelanteile zuzufügen. Dabei kann es sich um die erfindungsgemäßen ölfreien Polyester handeln sowie gegebenenfalls weitere der oben beschriebene Bindemittel. Gegebenenfalls können weitere lacktechnische Hilfsmittel zur Beeinflussung von Eigenschaften, wie z.B. Dispergierbarkeit, zugesetzt werden.

Eine weitere Arbeitsweise mischt die neutralisierten Polyester zunächst mit wenig Wasser, gegebenenfalls unter Zugabe von Füllstoffen, Pigmenten, Farbstoffen und dergleichen, und dispergiert diese Mischung auf einem Walzenstuhl oder in einer Kugelmühle zu Pasten. Aus diesen können dann durch Verdünnen mit weiterem Wasser und gegebenenfalls unter Zugabe weiterer Harz-Dispersionen und Additive die gebrauchsfertigen Lackzubereitungen hergestellt werden.

Die Komponente A des erfindungsgemäßen Überzugsmittels ist wäßrig, das heißt sie enthält weniger als 20 Gew.-%, bevorzugt unter 10 Gew.-%, organische Lösungsmittelanteile. Sie ist lagerstabil und zeigt auch nach längerem Stehen keine Phasentrennung. Der Festkörper der Komponente A beträgt zwischen 25 und 70 Gew.-%, bevorzugt über 35 und unter 60 Gew.-%.

Aus den Komponenten A und B wird das erfindungsgemäße Überzugsmittel kurz vor der Verarbeitung durch Vermischen bereitet. Das so erhaltene Überzugsmittel kann gegebenenfalls durch Zugabe von Wasser auf eine zur Applikation geeignete Viskosität eingestellt werden.

Die erfindungsgemäßen Überzugsmittel können durch übliche Techniken, wie z.B. Tauchen, Spritzen, Rollen, auf die zu lackierenden Materialien aufgetragen werden. Sie sind besonders zum Spritzen dicker Schichten geeignet. Danach vernetzt der aufgetragene Film. Das Vernetzen kann gegebenenfalls durch Erhöhung der Temperatur auf 10 bis 120°C, bevorzugt über 30 und unter 80°C, unterstützt werden. Gegebenenfalls kann vor dem Vernetzen bei erhöhter Temperatur abgelüftet werden. Die applizierten Schichtdicken richten sich nach dem Verwendungszweck des Überzugsmittels. Beispielsweise weisen Klarlacküberzüge eine Schichtdicke bis zu 60 µm auf, pigmentierte Basis- oder Decklacküberzüge von 10 bis 50 µm, Überzüge als Füller oder Steinschlagschutzüberzüge eine Schichtdicke von 30 bis 100 µm und Überzüge als Korrosionsschutzgrundierung eine Schichtdicke von 20 bis 70 µm.

Als Substrate sind verschiedene Materialien, beispielsweise Metallsubstrate wie Eisen oder Aluminium, aber auch temperaturempfindliche Substrate, wie Kunststoffsubstrate wie Polyolefine, Polycarbonate, Polyurethane oder Holz möglich sowie gegebenenfalls mit Vorbeschichtungen versehene Substrate geeignet. Dabei kann die Applikation auf ein getrocknetes oder vernetztes beschichtetes Substrat geschehen, oder es wird naß-in-naß gearbeitet, das heißt auf ein beschichtetes Substrat wird nach einer gegebenenfalls durch erhöhte Temperatur unterstützten Ablüftphase das Überzugsmittel aufgetragen. Danach findet eine gemeinsame Vernetzung der Überzugsschichten statt.

Das erfindungsgemäße Überzugsmittel eignet sich besonders zum Einsatz in der Mehrschichtlackierung. Dabei können je nach Pigmentierung beispielsweise Klarlacküberzugsmittel, Basislack- oder Decklacküberzugsmittel sowie Grundierungen, Füller und Steinschlagschutz-Überzugsmittel hergestellt werden. Bevorzugt ist die Verwendung als Klarlacküberzugsmittel, aufgetragen auf eine Basisschicht auf Basis eines wäßrigen Überzugsmittels. Besonders bevorzugt ist die Verwendung als Metallic- oder Uni- Basecoat. Die Überzüge können vor dem weiteren Beschichten vernetzt werden oder sie werden bevorzugt naß-in-naß aufgetragen. Die so erhaltenen Mehrschicht-Überzüge zeichnen sich durch eine hohe Kratzfestigkeit, durch ein hohes Glanzhaltungsvermögen, sowie durch eine erhöhte Beständigkeit im Kondenswasserklima aus. Sie sind besonders zur Verwendung in der Autoreparaturlackierung geeignet.

Die folgenden Beispiele erläutern die Erfindung. Teile und Prozentangaben beziehen sich, sofern nicht anderes angegeben, auf das Gewicht.

Beispiel 1 (Vergleich)

**Herstellung eines ölfreien gesättigten Polyesterharzes**

In einem Reaktionskolben mit beheizter Kolonne werden unter Inertgas 1047 g Neopentylglykol und 217 g Trimethylolpropan eingefüllt und vorsichtig aufgeschmolzen. Nach Einschalten des Rührwerks werden 433 g Isophthalsäure und 200 g Trimellithsäureanhydrid zugegeben. Es wird langsam bis auf 200°C geheizt, wobei die Kolonnenkopftemperatur 102°C nicht überschreiten darf. Dem klaren Ansatz werden nacheinander 858 g Isodekanol und 1245 g Trimellithsäureanhydrid zugegeben und bei 170 bis 180°C bis auf eine Säurezahl von 40 bis 45 kondensiert. Das Alkydharz wir abgekühlt, 75 % der Säuregruppen mit Triethylamin neutralisiert und mit soviel entionisiertem Wasser verdünnt, bis eine fließfähige Dispersion entsteht.

Festkörper : 35,8 Gew.-% (nach 1 Stunde Erwärmen auf 150°C)
Hydroxylzahl: 140

Beispiel 2 (Vergleich)

**Herstellung eines ölfreien gesättigten Polyesterharzes**

In einem Vierhalskolben, der mit einem Rührer, einem Thermometer und einer Füllkörperkolonne ausgerüstet ist, werden 302 g Cyclohexandimethanol, 92 g Glycerin, 124 g Dimethylolpropionsäure und 584 g Adipinsäure zum Schmelzen gebracht und anschließend unter Rühren so erhitzt, daß die Kolonnenkopftemperatur 101°C nicht überschreitet. Die Temperatur des Reaktionsgemisches erhöht sich mit fortschreitender Kondensation und sollte dabei nicht über 220°C steigen. Es wird solange verestert, bis eine Säurezahl unter 45 erreicht ist. Anschließend werden 80 % der Säuregruppen mit Dimethyl-aminoisopopanol neutralisiert und mit soviel entionisiertem Wasser verdünnt, bis eine verarbeitungsfähige Dispersion entsteht.

Festkörper: ca. 35 Gew.-% (1 Stunde 150°C)
Hydroxylzahl: 60

Beispiel 3 (Vergleich)

**Herstellung eines ölfreien ungesättigten Polyesterharzes**

390 g Isophthalsäure, 82 g Tetrahydrophthalsäureanhydrid, 85 g Maleinsäureanhydrid werden zusammen mit 216 g Cyclohexandimethanol, 301 g Neopentylglykol und 87 g Tris-(hydroxyethyl-)-isocyanurat in einem Dreihalskolben unter Inertgas vorsichtig aufgeschmolzen und unter Rühren langsam bis auf 210°C erwärmt. Es wird solange kondensiert, bis die Säurezahl 50 beträgt. Danach wird auf 150°C gekühlt, 261 g Adipinsäure zugegeben und wieder bis auf 210°C aufgewärmt. Es wurde solange kondensiert, bis die Säurezahl unter 45 betrug. Nach Abkühlen auf 120°C wird mit 150 g Butoxyethanol verdünnt und 70 % der Säuregruppen mit einem Gemisch aus Triethylamin und 2,2-Dimethyl-1,3-propandiamin im Equivalentverhältnis von 5 : 1 neutralisiert. Anschließend verdünnt man mit soviel entionisiertem Wasser bis eine fließfähige Dispersion entsteht.

Festkörper : = 38,6 Gew.-%
Hydroxylzahl: = 31

Beispiel 4

**Herstellung eines ölfreien gesättigten Polyesterharzes**

Es wurde gearbeitet wie in Beispiel 2 unter Einsatz folgender Komponenten und Mengen:

| | |
|---|---|
| 302 g | Cyclohexandimethanol |
| 184 g | Glycerin |
| 67 g | Dimethylolpropionsäure |
| 292 g | Adipinsäure |
| 340 g | 1,4-Cyclohexandicarbonsäure |
| 54 g | eines Addukts aus ein Mol Trimellithsäureanhydrid und ein Mol Polyethylenoxidmonomethanolether (Molmasse 350) |

Man erhielt ein Produkt mit einer Säurezahl von 24, einer OH-Zahl von 135 und 62 mEqu Polyethylenoxid-Einheiten.

Das erhaltene Produkt wird mit einem Gemisch aus Triethylamin und Isophorondiamin (im Equivalentverhältnis 3 : 1) auf 100 % neutralisiert mit so viel entionisiertem Wasser verdünnt, bis eine verarbeitungsfähige Dispersion entsteht. Die Dispersion hat einen Festkörpergehalt von 36,6 Gew.-%.

Die wäßrigen Dispersionen nach Beispiel 1 bis 4 sind beim Lagern ohne Koagulatbildung stabil. Durch Zusatz eines Polyisocyanatgemisches wie im nachstehenden Beispiel 5 erhalten, im NCO/OH-Equivalentverhältnis von 1,2 : 1, wird ein Klarlack hergestellt, der gegebenenfalls mit weiterem Wasser auf Spritzviskosität eingestellt wird. Mit ihm werden auf Blechen, die grundiert und mit einem wäßrigen blauen Metallic-Basecoat versehen sind, in drei Spritzgängen ein Keil von etwa 40 bis 150 µm Schichtdicke aufgespritzt, wobei jeweils 5 Minuten bei Raumtemperatur abgelüftet wird. Bei der Beurteilung des hochglänzenden harten Films nach 24 Stunden werden maximal folgende Schichtdicken blasenfrei erhalten:

Harz nach Beispiel 1, etwa 40 µm
Harz nach Beispiel 2, etwa 60 bis 70 µm
Harz nach Beispiel 3, etwa 60 µm
Harz nach Beispiel 4, etwa 120 µm.

Beispiel 5

**Herstellung eines Isocyanats**

14 T des Reaktionsproduktes aus Trimethylolpropan und Tetramethylxylylendiisocyanat (1 : 3) (70 %ig in Methoxypropylacetat) werden mit 54,4 T Hexamethylendiisocyanat vermischt. Kurz vor dem Einsatz als Komponente B) werden 31,6 T Butoxyethanol zugemischt. Die Komponente hat eine Viskosität von 5 mPa.s (Festkörper 64,2 Gew.-%).

Beispiel 6 (Vergleich)

**Herstellung eines fettsäuremodifizierten Polyesterharzes**

664 g Tallölfettsäure werden in einem Reaktionskolben unter Rühren und Inertgas gemeinsam mit 243 g Trimethylolpropan, 70 g Dipentaerythrit, 107 g Dimethylolpropionsäure, 56 g Maleinsäureanhydrid und 261 g Phthalsäureanhydrid vorsichtig aufgeschmolzen und bei etwa 200°C bis zu einer Säurezahl von etwa 50 kondensiert. Das Alkydharz wird abgekühlt und mit Diacetonalkohol auf 90 Gew.-% verdünnt. Anschließend werden 75 % der Säuregruppe mit Dimethylaminoethanol neutralisiert und mit so viel entionisiertem Wasser verdünnt, bis eine fließfähige Dispersion entsteht.
Festkörper 35 Gew.-% (1 Stunde, 150°C).

Beispiel 7

610 g Tallölfettsäure werden in einem 2-Liter-Reaktionskolben unter Rühren und Inertgas gemeinsam mit 263 Trimethylolpropan, 70 g Dipentaerythrit, 97 g Dimethylolpropionsäure, 37 g Maleinsäureanhydrid und 271 g Hexahydrophthalsäureanhydrid vorsichtig aufgeschmolzen und bei 200°C bis 220°C bis zu einer Säurezahl von 30 bis 35 kondensiert. Anschließend wird mit 27 g eines Adduktes aus 194 g 3(4)-Isocyanatomethyl-1-methylcyclohexylisocyanat und 350 g Polyethylenoxidmonomethylether mit einem Molekulargewicht von 350 umgesetzt. Das Alkydharz wird abgekühlt und mit Diacetonalkohol auf ca. 90 Gew.-% verdünnt. Anschließend werden 80 % der Säuregruppen mit einem Gemisch aus Dimethylaminoethanol und Isophorondiamin im Gewichtsverhältnis 4 : 1 neutralisiert und mit soviel entionisiertem Wasser verdünnt, bis eine fließfähige Dispersion entsteht.

| Festkörper ca. 34 Gew.-% (1 Stunde, 150°C) | |
|---|---|
| Säurezahl | 30,8 |
| Hydroxylzahl | ca. 90 |
| mittlere Teilchengröße | ca. 90 nm |

Nach Zusatz einer frisch hergestellten Polyisocyanat-Lösung nach Beispiel 5 im NCO/OH-Äquivalentverhältnis von 1,5 : 1 wird der Klarlack gegebenenfalls auf Spritzviskosität eingestellt. In drei Spritzgängen, zwischen denen je 5 Minuten abgelüftet wird, wird eine Trockenfilmschichtdicke von 110 µm aufgespritzt. Nach 24 Stunden trocknen bei Raumtemperatur ist ein harter, glänzender Film entstanden, der keine Kochblasen zeigt.

**Patentansprüche**

1. Wasserverdünnbares Zweikomponenten(2K)-Überzugsmittel, enthaltend die getrennt vorliegenden unmittelbar vor der Anwendung zu vermischenden Komponenten A) und B):

   A) 40 - 95 Gew.-% eines OH-Gruppen enthaltenden filmbildenden gesättigten oder ungesättigten Polyesters, der mit Fettsäuren modifiziert sein kann, oder eines Gemisches derartiger Polyester in der Form von wäßrigen Dispersionen, wobei der Polyester oder das Gemisch im Durchschnitt eine OH-Zahl von 20 bis 200, ein Zahlenmittel der Molmasse (Mn) von 500 bis 100000, und, jeweils bezogen auf 100 g Harzfestkörper einen Gehalt an Säurefunktionen von 1 bis 80 mEqu und einen Gehalt an Ethylenoxideinheiten von 1 bis 150 mEqu in Form von Polyethylenoxidketten aufweist, wobei die Summe der Säurefunktionen und der Ethylenoxideinheiten 2 bis 200 mEqu beträgt, und wobei die Säurefunktionen gegebenenfalls zumindest teilweise neutralisiert sind,

   B) 60- 5 Gew.-% eines oder mehrerer Polyisocyanate mit mehr als einer freien Isocyanatgruppe, die bei Raumtemperatur flüssig sind oder die gegebenenfalls unter Zusatz eines oder mehrerer organischer Lösemittel, flüssig gemacht sind, wobei sich die Gewichtsprozente von A) und B) jeweils auf den Harz-Festkörpergehalt beziehen und auf 100 Gew.-% addieren, sowie

   C) gegebenenfalls ein oder mehrere zusätzliche Bindemittel, übliche Pigmente, Füllstoffe und/oder lackübliche Additive oder Hilfsstoffe, eingemischt in die Komponenten A) und/oder B).

2. Wasserverdünnbares Überzugsmittel nach Anspruch 1, worin der Polyester ölfrei ist.

**3.** Wasserverdünnbares Überzugsmittel nach einem der vorhergehenden Ansprüche, worin die Polyester der Komponente A ein Gemisch aus einem oder mehreren Polyestern mit Säurefunktionen und einem oder mehreren Polyestern mit mindestens einer seitenständigen, Ethylenoxideinheiten enthaltenden Kette ist.

**4.** Wasserverdünnbares Überzugsmittel nach einem der vorhergehenden Ansprüche, worin das Gemisch der Polyester der Komponente A aus einer Carboxylgruppen und Hydroxylgruppen enthaltenden Komponente AI und einer Hydroxylgruppen enthaltenden Komponente A2 besteht.

**5.** Wasserverdünnbares Überzugsmittel nach einem der vorhergehenden Ansprüche, worin die Polyisocyanate der Komponente B oder deren Lösungen bei 23°C eine Viskosität von 0,5 bis 2000 mPas aufweisen.

**6.** Wasserverdünnbares Überzugsmittel nach Anspruch 5 worin die Polyisocyanate der Komponente B in einem oder mehreren wasserverdünnbaren organischen Lösemitteln mit einem Festkörpergehalt von über 40 Gew.-% vorliegen.

**7.** Wasserverdünnbares Überzugsmittel nach Anspruch 5 oder 6 worin die wasserverdünnbaren Lösemittel Alkoxyalkohole, Ketoalkohole und/oder Glykole sind.

**8.** Wasserverdünnbares Überzugsmittel nach einem der vorhergehenden Ansprüche, worin die Komponente B) eine Mischung aus mindestens einem Polyisocyanat mit mehr als einer freien Isocyanatgruppe, insbesondere mindestens einem aliphatischen Polyisocyanat, und mindestens einem davon verschiedenen, sterisch behinderten Polyisocyanat umfaßt, das die allgemeine Formel

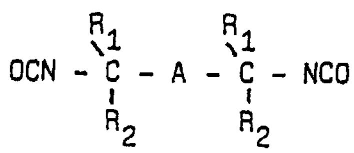

(I)

aufweist, wobei

$R_1$ = H oder $R_2$,
$R_2 = C_nH_{2n+1}$

mit n = 1 bis 6,
wobei die Substituenten R1 und R2 gleich oder verschieden und linear oder verzweigt sein können, und
A) eine einfache Bindung, ein aromatischer oder alicyclischer Rest oder ein linearer oder verzweigter aliphatischer Rest mit 1 bis 12 Kohlenstoffatomen ist, die bei Raumtemperatur, gegebenenfalls durch Zusatz eines oder mehrerer organischer Lösemittel flüssig sind.

**9.** Wäßriges Überzugsmittel nach Anspruch 8, worin die Komponente B) ein oder mehrere sterisch nicht behinderte, difunktionelle Polyisocyanate in Kombination mit einem oder mehreren sterisch behinderten, mindestens trifunktionellen Polyisocyanaten, bei denen es sich um Trimerisierungsprodukte oder Reaktionsprodukte der Polyisocyanate der allgemeinen Formel I nach Anspruch 8 mit mindestens dreiwertigen Alkoholen oder mit Wasser handelt, umfaßt.

**10.** Wäßriges Überzugsmittel nach einem der vorhergehenden Ansprüche, dadurch gekennzeichnet, daß es einen oder mehrere Emulgatoren enthält.

**11.** Wasserverdünnbares Überzugsmittel nach einem der vorhergehenden Ansprüche, worin die Komponente A) zusätzlich ein oder mehrere Di- und/oder Polyamine mit primären und/oder sekundären Aminogruppen enthält.

**12.** Wasserverdünnbares Überzugsmittel nach einem der vorhergehenden Ansprüche, dadurch gekennzeichnet, daß der Gehalt an Polyethylenoxid-Einheiten unter 100 mEqu pro 100g Festharz liegt.

**13.** .Verfahren zur Herstellung eines wäßrigen Überzugsmittels gemäß einem der Ansprüche 1 bis 12, dadurch gekennzeichnet, daß man unmittelbar vor der Anwendung

A) 40 - 95 Gew.-% eines oder mehrerer OH-Gruppen enthaltender filmbildender Polymerer in der Form von wäßrigen Dispersionen von Polyestern, wie in Anspruch 1 definiert, mit

B) 60 - 5 Gew.-% eines oder mehrerer Polyisocyanate mit mehr als einer freien Isocyanatgruppe, die bei Raumtemperatur flüssig sind, oder die man gegebenenfalls unter Zusatz eines oder mehrerer organischer Lösemittel flüssig macht,
gegebenenfalls unter Zusatz eines oder mehrerer Emulgatoren, vermischt, wobei sich die Gew.-% von A) und B) jeweils auf den Harzfestkörpergehalt beziehen und auf 100 Gew.-% addieren, wobei man der Komponente A) und/oder B) vor dem Vermischen oder dem Gemisch aus A) und B) gegebenenfalls

C) übliche Pigmente, Füllstoffe, lackübliche Additive und/oder Hilfsstoffe beimischt.

**14.** Verfahren nach Anspruch 13, dadurch gekennzeichnet, daß man das oder die Polyisocyanate der Komponente B) in einem oder mehreren organischen mit Wasser zumindest teilweise mischbaren Losemitteln einsetzt.

**15.** Verwendung der wäßrigen Überzugsmittel nach einem der Ansprüche 1 bis 12 bei der Herstellung von Mehrschichtlackierungen.

**16.** Verwendung der wäßrigen Überzugsmittel nach einem der Ansprüche 1 bis 12 bei der Lackierung von thermisch empfindlichen Substraten bei Härtungstemperaturen von 25 bis 80°C.

## Claims

**1.** A water-thinnable two-component (2-C) coating medium, containing components A) and B), which are present separately and are mixed immediately before application:

A) 40 - 95 % by weight of a film-forming, saturated or unsaturated polyester, which contains OH groups and which can be modified with fatty acids, or a mixture of polyesters of this type in the form of aqueous dispersions, wherein the polyester or the mixture has on average an OH number of 20 to 200, a number average molecular weight (Mn) of 500 to 100,000, and, with respect to 100 g resin solids in each case, has a content of acid functions of 1 to 80 milliequivalents and a content of ethylene oxide units of 1 to 150 milliequivalents in the form of polyethylene oxide chains, wherein the sum of the acid functions and the ethylene oxide units is 2 to 200 milliequivalents, and wherein the acid functions are optionally at least partially neutralised,

B) 60 - 5 % by weight of one or more polyisocyanates comprising more than one free isocyanate group, which are liquid at room temperature or which are optionally liquefied by the addition of one or more organic solvents, wherein the percentages by weight of A) and B) are each given with respect to the resin solids content and add up to 100 % by weight, as well as

C) optionally one or more additional binder vehicles, customary pigments, extenders and/or customary lacquer additives or adjuvant substances, which are admixed with components A) and/or B).

**2.** A water-thinnable coating medium according to claim 1, wherein the polyester is oil-free.

**3.** A water-thinnable coating medium according to either one of the preceding claims, wherein the polyester of component A is a mixture of one or more polyesters comprising acid functions and of one or more polyesters comprising at least one side chain containing ethylene oxide units.

**4.** A water-thinnable coating medium according to any one of the preceding claims, wherein the mixture of polyesters of component A consists of a component A1, which contains carboxyl groups and hydroxyl groups, and of a component A2, which contains hydroxyl groups.

**5.** A water-thinnable coating medium according to any one of the preceding claims, wherein the polyisocyanates of component B or solutions thereof have a viscosity at 23°C of 0.5 to 2000 mPas.

**6.** A water-thinnable coating medium according to claim 5, wherein the polyisocyanates of component B are present in one or more water-thinnable organic solvents at a solids content greater than 40 % by weight.

**7.** A water-thinnable coating medium according to claims 5 or 6, wherein the water-thinnable solvents are alkoxy alcohols, keto alcohols and/or sterically hindered glycols.

**8.** A water-thinnable coating medium according to any one of the preceding claims, wherein component B) comprises a mixture of at least one polyisocyanate containing more than one free isocyanate group, particularly at least one aliphatic polyisocyanate, and at least one sterically hindered polyisocyanate which is different therefrom and which corresponds to general formula

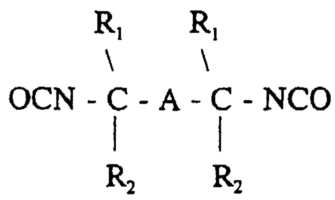

(I)

wherein

$R_1 = H$ or $R_2$,
$R_2 = C_nH_{2n+1}$

where n = 1 to 6,
wherein the substituents $R_1$ and $R_2$ are the same or different and can be linear or branched, and
A) is a single bond, an aromatic or alicyclic radical or a linear or branched aliphatic radical comprising 1 to 12 carbon atoms, which are liquid at room temperature, optionally due to the addition of one or more organic solvents.

**9.** An aqueous coating medium according to claim 8, wherein component B) comprises one or more sterically unhindered, di-functional polyisocyanates in combination with one or more sterically hindered polyisocyanates which are at least tri-functional and which are trimerisation products or reaction products of polyisocyanates of general formula I according to claim 8 with alcohols which are at least trihydric or with water.

**10.** An aqueous coating medium according to any one of the preceding claims, characterised in that it contains one or more emulsifiers.

**11.** A water-thinnable coating medium according to any one of the preceding claims, wherein component A) additionally contains one or more di- and/or polyamines comprising primary and/or secondary amino groups.

**12.** A water-thinnable coating medium according to any one of the preceding claims, characterised in that the content of polyethylene oxide units is less than 100 milliequivalents per 100 g solid resin.

**13.** A method of producing an aqueous coating medium according to any one of claims 1 to 12, characterised in that the following are mixed immediately before application:

A) 40 - 95 % by weight of one or more film-forming polymers which contain OH groups, in the form of aqueous dispersions of polyesters as defined in claim 1, and

B) 60 - 5 % by weight of one or more polyisocyanates comprising more than one free isocyanate group, which are liquid at room temperature or which are optionally liquefied by the addition of one or more organic solvents, optionally with the addition of one or more emulsifiers, wherein the percentages by weight of A) and B) are each given with respect to the resin solids content and add up to 100 % by weight, wherein

C) customary pigments, extenders and/or customary lacquer additives or adjuvant substances are admixed with components A) and/or B) or with the mixture of A) and B) before mixing.

**14.** A method according to claim 13, characterised in that the polyisocyanate or polyisocyanates of component B) are used in one or more organic solvents which are at least partially miscible with water.

**15.** The use of the aqueous coating media according to any one of claims 1 to 12 for the production of multi-layer coatings.

**16.** The use of the aqueous coating media according to any one of claims 1 to 12 for the lacquer-coating of thermally sensitive substrates, using hardening temperatures of 25 to 80°C.

**Revendications**

**1.** Produit de revêtement à deux composants, diluable à l'eau, contenant les composants A) et B), conservés séparément, à mélanger immédiatement avant l'application :

A) 40 à 95 % en poids d'un polyester filmogène saturé ou insaturé contenant des groupes OH, qui peut être modifié par des acides gras, ou d'un mélange de tels polyesters, à l'état de dispersion aqueuse, le polyester ou mélange de polyesters ayant en moyenne un indice d'OH de 20 à 200, une masse moléculaire moyenne, moyenne en nombre, Mn, de 500 à 100 000 et, dans tous les cas pour 100 g de matières solides résineuses, une teneur en fonctions acides de 1 à 80 milliéquivalents et une teneur en motifs d'oxyde d'éthylène de 1 à 150 milliéquivalents sous la forme de chaînes d'oxyde de polyéthylène, la somme des fonctions acides et des motifs d'oxyde d'éthylène représentant de 2 à 200 milliéquivalents, et les fonctions acides étant le cas échéant neutralisées en partie au moins,
B) 60 à 5 % en poids d'un ou plusieurs polyisocyanates à plus d'un groupe isocyanate libre, liquides à température ambiante ou éventuellement liquéfiés par addition d'un ou plusieurs solvants, les pourcentages en poids de A) et. B) se rapportant aux matières solides résineuses et se complétant à 100 % en poids, et
C) le cas échéant un ou plusieurs autres liants, des pigments et matières de charge usuels et/ou des additifs ou produits auxiliaires usuels pour peintures et vernis, mélangés dans les composants A) et/ou B).

**2.** Produit de revêtement diluable à l'eau selon revendication 1, dans lequel le polyester est exempt d'huile.

**3.** Produit de revêtement diluable à l'eau selon l'une des revendications qui précèdent, dans lequel les polyesters du composant A) consistent en un mélange d'un ou plusieurs polyesters à fonctions acides et d'un ou plusieurs polyesters à au moins une chaîne latérale contenant des motifs d'oxyde d'éthylène.

**4.** Produit de revêtement diluable à l'eau selon l'une des revendications qui précèdent, dans lequel le mélange des polyesters du composant A) consistent en un composant A1) contenant des groupes carboxyle et des groupes hydroxy et un composant A2) contenant des groupes hydroxy.

**5.** Produit de revêtement diluable à l'eau selon l'une des revendications qui précèdent, dans lequel les polyisocyanates du composant B) ou leur solution ont, à 23°C, une viscosité de 0,5 à 2000 mPas.

**6.** Produit de revêtement diluable à l'eau selon revendication 5, dans lequel les polyisocyanates du composant B) sont dans un ou plusieurs solvants organiques diluables à l'eau, à une teneur en matières solides supérieure à 40 % en poids.

**7.** Produit de revêtement diluable à l'eau selon revendication 5 ou 6, dans lequel les solvants diluables à l'eau sont des alcoxyalcools, des céto-alcools et/ou des glycols.

**8.** Produit de revêtement diluable à l'eau selon l'une des revendications qui précèdent, dans lequel le composant B) consiste en un mélange d'au moins un polyisocyanate à plus d'un groupe isocyanate libre, en particulier au moins un polyisocyanate aliphatique, et au moins un autre polyisocyanate objet d'un empêchement stérique, qui répond à la formule générale

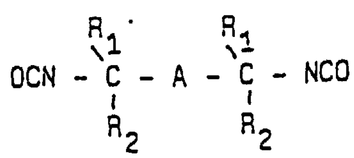 (I)

dans laquelle

$R_1$ = H ou $R^2$,
$R_2$ = $C_nH_{2n+1}$ avec n = 1 à 6,

les substituants $R_1$ et $R_2$ pouvant être linéaires ou ramifiés,
et
A représente une liaison simple, un radical aromatique ou alicyclique ou un radical aliphatique linéaire ou ramifié en C1-C12,
qui sont liquides à température ambiante, éventuellement après addition d'un ou plusieurs solvants organiques.

**9.** Produit de revêtement aqueux selon revendication 8, dans lequel le composant B) consiste en un ou plusieurs polyisocyanates difonctionnels, non objets d'un empêchement stérique, en combinaison avec un ou plusieurs polyisocyanates au moins trifonctionnels objets d'un empêchement stérique, qui consistent eux-mêmes en produits de trimérisation ou produits de réaction des polyisocyanates de formule générale I de la revendication 8 avec des alcools au moins trivalents ou avec l'eau.

**10.** Produit de revêtement aqueux selon une des revendications qui précèdent, caractérisé en ce qu'il contient un ou plusieurs agents émulsionnants.

**11.** Produit de revêtement diluable à l'eau selon une des revendications qui précèdent, dans lequel le composant A) contient en outre une ou plusieurs di- et/ou poly-amines à groupes amino primaires et/ou secondaires.

**12.** Produit de revêtement diluable à l'eau selon une des revendications qui précèdent, caractérisé en ce que la teneur en motifs oxyde de polyéthylène est inférieure à 100 milliéquivalents pour 100 g de résine solide.

**13.** Procédé de préparation d'un produit de revêtement aqueux selon l'une des revendications 1 à 12, caractérisé en ce que, immédiatement avant l'application, on mélange

A) 40 à 95 % en poids d'un ou plusieurs polymères filmogènes contenant des groupes OH sous la forme des dispersions aqueuses de polyesters définies dans la revendication 1, avec
B) 60 à 5 % en poids d'un ou plusieurs polyisocyanates à plus d'un groupe isocyanate libre, liquides à température ambiante ou liquéfiés le cas échéant par addition d'un ou plusieurs solvants organiques,
le cas échéant après addition d'un ou plusieurs agents émulsionnants,
les pourcentages en poids indiqués pour A) et B) se rapportant aux matières solides résineuses et se complétant à 100 % en poids,
et le cas échéant on mélange au composant A) et/ou au composant B), avant leur mélange mutuel, ou au mélange de A) et B)
C) des pigments usuels, des matières de charge, des additifs et/ou produits auxiliaires usuels pour peintures et vernis.

**14.** Procédé selon revendication 13, caractérisé en ce que le ou les polyisocyanates du composant B) sont mis en oeuvre dans un ou plusieurs solvants organiques miscibles en partie au moins à l'eau.

**15.** Utilisation des produits de revêtement aqueux selon une des revendications 1 à 12 pour l'application de revêtements à plusieurs couches.

**16.** Utilisation des produits de revêtement aqueux selon une des revendications 1 à 12 pour le revêtement de supports sensibles à la chaleur, à des températures de durcissement de 25 à 80°C.